# EUROPEAN PATENT APPLICATION

(11) **EP 4 826 802 A1**
(43) Date of publication of application: **21.10.2026**
(21) Application number: 24903925.6
(22) Date of filing: 16.10.2024
(51) Int. Cl.: H01M 4/62, H01M 4/134, H01M 10/052, C08G 73/10, H01M 4/02

(54) **POLYIMIDE BINDER FOR NEGATIVE ELECTRODE MATERIAL OF SECONDARY BATTERY**

(30) Priority: 12.12.2023 KR 20230179319
(71) Applicant: Kolon Industries, Inc., Seoul 07793 (KR)
(72) Inventor: MOON, Jeong Yeol, Seoul 07793 (KR); CHOE, Han Sol, Seoul 07793 (KR); KIM, Shin, Seoul 07793 (KR)
(74) Representative: Vossius & Partner Patentanwälte Rechtsanwälte mbB
(86) International application number: PCT/KR2024/015681
(87) International publication number: WO 2025/127358

(57) **Abstract**

The present disclosure relates to a polyimide binder for a secondary battery negative electrode material that may improve charge-discharge efficiency and increase silicon content.

## Description

### TECHNICAL FIELD

The present disclosure relates to a polyimide binder for a negative electrode material of a secondary battery.

### BACKGROUND ART

Various approaches have been developed to increase the energy density of lithium-ion batteries. Since silicon has a theoretical capacity ten times greater than that of conventional graphite negative electrode materials, it can significantly increase the energy density compared to existing lithium-ion batteries. However, during charging and discharging of a lithium-ion battery, the volume of silicon continuously expands to more than four times its original volume. This volumetric expansion causes silicon particles to be pulverized and micronized, leading to detachment or the continuous formation of an SEI layer on a freshly exposed negative electrode surface due to micronization. As a result, battery performance degrades and battery cycle life is reduced. Therefore, although silicon is currently added at about 5% to graphite for mass production, a large amount of silicon is required to increase the capacity of lithium-ion batteries.

To increase the silicon content, development is underway to control the volumetric expansion of silicon itself. However, there is an urgent need for the development of a high-performance aqueous binder to suppress the volumetric expansion of silicon for enhancing battery cycle life, securing adhesion between a negative electrode layer and a copper (Cu) current collector, and ensuring inter-particle binding.

Currently, CMC/SBR-based binders are used for graphite negative electrode materials, but they do not enable an increase in silicon content. In spite of various recent developments in polyacrylic acid (PAA)-based binders, such binders are unable to suppress the volumetric expansion of silicon, thereby failing to secure charge-discharge characteristics of lithium-ion batteries and to improve the battery cycle life.

### DISCLOSURE OF THE INVENTION

### TECHNICAL PROBLEM

The objective of the present disclosure is to provide a polyimide binder for a negative electrode material of a secondary battery for improving the charge-discharge efficiency of a battery and increasing the silicon content.

### TECHNICAL SOLUTION

An aspect of the present disclosure provides a polyimide binder for a negative electrode material of a secondary battery, the polyimide binder including a repeating unit represented by the following Chemical Formula 1.

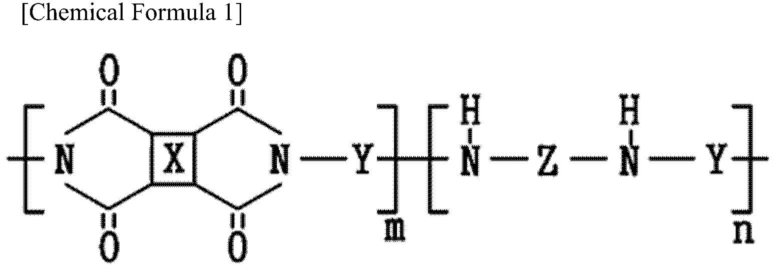

In Chemical Formula 1, X is a group derived from an aromatic anhydride, a substituted or unsubstituted C6-C30 aromatic group, or a substituted or unsubstituted C4-C30 alicyclic group; Y is a substituted or unsubstituted C6-C30 aromatic group containing one or more aromatic rings, or a substituted or unsubstituted C4-C30 alicyclic group containing one or more rings; Z is a substituted or unsubstituted C6-C30 aromatic group containing one or more aromatic rings, or a substituted or unsubstituted C4-C30 alicyclic group containing one or more rings; and m and n are positive integers.

In the present disclosure, m may be 4 or more, and a molar ratio of m to n may be 1:1 to 1:5.

In the present disclosure, X may be one or more selected from the following. 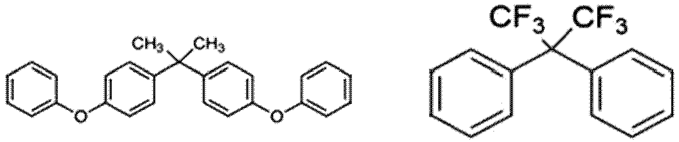 and

In the present disclosure, Y may be one or more selected from the following. 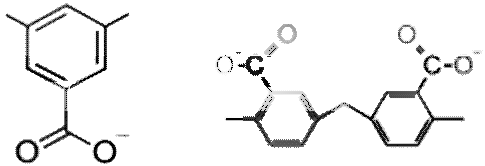 and

In the present disclosure, Z may be one or more selected from the following. 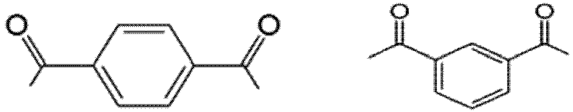 and

In the present disclosure, the polyimide may be prepared by reacting an acid anhydride, a diamine, and a carbonyl chloride.

In the present disclosure, a molar amount of the acid anhydride and a molar amount of the carbonyl chloride may be 20 to 60 moles and 40 to 80 moles, respectively, based on 100 moles of diamine.

In the present disclosure, the acid anhydride may be one or more selected from the following.

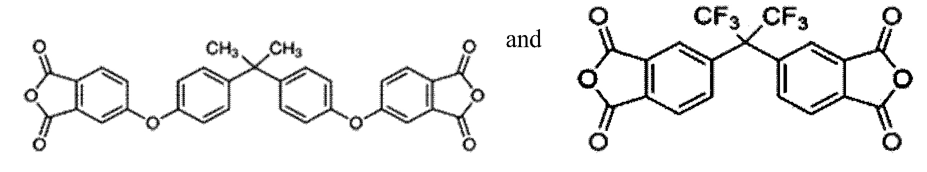

In the present disclosure, the diamine may be one or more selected from the following.

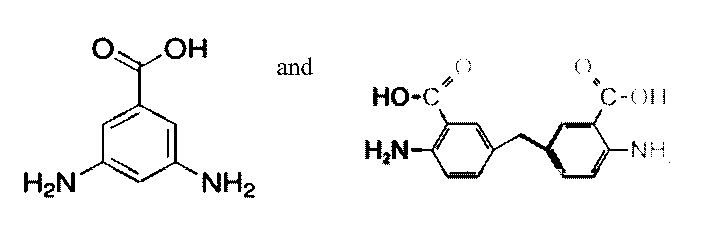

In the present disclosure, the carbonyl chloride may be one or more selected from the following.

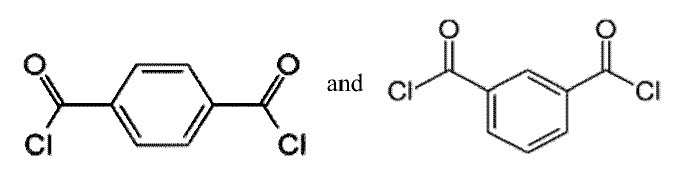

In the present disclosure, the polyimide may be water-soluble.

Another aspect of the present disclosure provides a negative electrode for a secondary battery, comprising the polyimide binder for a negative electrode material of a secondary battery.

Another aspect of the present disclosure provides a secondary battery comprising the negative electrode for a secondary battery.

### ADVANTAGEOUS EFFECTS

The polyimide binder for a negative electrode material of a secondary battery according to the present disclosure may increase the silicon content, thereby improving the charge-discharge efficiency and cycle life of the secondary battery.

The polyimide according to the present disclosure is water-soluble, and thus may be applied to conventional processes for preparing a negative electrode slurry and manufacturing a negative electrode plate.

Furthermore, the polyimide binder for a negative electrode material of a secondary battery according to the present disclosure has improved adhesion to and interaction with metal surfaces, thereby enhancing electrochemical stability and mechanical stability of the electrode, and thus achieving high initial capacity and improved cycle life characteristics.

### BEST MODE FOR CARRYING OUT THE INVENTION

Hereinafter, the present disclosure will be described in detail with reference to exemplary embodiments and examples so that those skilled in the art can easily carry out the present disclosure. However, the present disclosure can be implemented in various different forms and is not limited to the embodiments described herein.

In this specification, the term "substituted or unsubstituted" is intended to include both a case where a substituent is substituted with any or a specific functional group and a case where no substituent is substituted. The substituted case means that any or a specific functional group is bonded to one or more carbons among the carbons of the substituent.

Specifically, the substituted case may mean that one or more hydrogen atoms in the functional group are substituted with one or more substituents selected from the group consisting of a halogen atom (F, Cl, Br, I), a C1-C10 alkyl group, a C1-C10 alkoxy group, a C1-C10 halogenated alkyl group, a C3-C20 cycloalkyl group, a C3-C20 cycloalkenyl group, a C6-C30 aryl group, a hydroxyl group, an amino group, a carboxylic acid group, an aldehyde group, and the like, but is not necessarily limited thereto.

The polyimide binder for a negative electrode material of a secondary battery according to the present disclosure does not form a network structure within the polymer and, unlike conventional CMC/SBR, achieves line adhesion instead of point adhesion, thereby providing improved adhesive strength.

Hereinafter, the present disclosure will be described in detail.

An aspect of the present disclosure provides a polyimide binder for a negative electrode material of a secondary battery, comprising a repeating unit represented by the following Chemical Formula 1.

In the present disclosure, the polyimide may be water-soluble, and 15 wt% or less, preferably 10 wt% or less, based on solid content, may be completely dissolved. Since the polyimide is soluble in water, a negative electrode slurry may be prepared in an aqueous system and a negative electrode plate may be manufactured, as in conventional methods.

In the present disclosure, the polyimide may be represented by the following Chemical Formula 1.

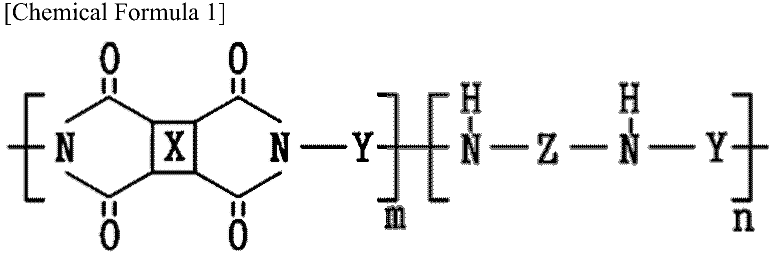

In Chemical Formula 1, X is a group derived from an aromatic anhydride, a substituted or unsubstituted C6-C30 aromatic group, or a substituted or unsubstituted C4-C30 alicyclic group; Y is a substituted or unsubstituted C6-C30 aromatic group containing one or more aromatic rings, or a substituted or unsubstituted C4-C30 alicyclic group containing one or more rings; and Z is a substituted or unsubstituted C6-C30 aromatic group containing one or more aromatic rings, or a substituted or unsubstituted C4-C30 alicyclic group containing one or more rings, where m and n are positive integers.

In addition, in the present disclosure, Chemical Formula 1 may further include a monovalent cation.

Specifically, in X, the aromatic anhydride may include an aromatic anhydride derivative. Such an aromatic anhydride derivative, widely used in the art for producing polyimides, may be used without limitation.

In X, the aromatic group may be a benzene group, a naphthalene group, an anthracene group, a phenanthrene group, a fluorene group, a fluoranthene group, or the like, and the alicyclic group may be a cyclopropyl group, a cyclobutyl group, a cyclopentyl group, a cyclohexyl group, a 4-tert-butylcyclohexyl group, an isobornyl group, a norbornenyl group, a menthyl group, an adamantyl group, or the like.

In Y, the aromatic group may be a benzene group, a naphthalene group, an anthracene group, a phenanthrene group, a fluorene group, a fluoranthene group, or the like, and the alicyclic group may be a cyclopropyl group, a cyclobutyl group, a cyclopentyl group, a cyclohexyl group, a 4-tert-butylcyclohexyl group, an isobornyl group, a norbornenyl group, a menthyl group, an adamantyl group, or the like.

In Z, the aromatic group may be a benzene group, a naphthalene group, an anthracene group, a phenanthrene group, a fluorene group, a fluoranthene group, or the like, and the alicyclic group may be a cyclopropyl group, a cyclobutyl group, a cyclopentyl group, a cyclohexyl group, a 4-tert-butylcyclohexyl group, an isobornyl group, a norbornenyl group, a menthyl group, an adamantyl group, or the like.

In addition, m and n are positive integers, m may be 4 or more, and the molar ratio of m to n may be 1:1 to 1:5, preferably 1:1.2 to 1:2, and most preferably 1:1.5. If m is less than 4, the prepared polyimide may not be soluble in water, and thus the above-mentioned range is preferable.

In the present disclosure, X may be one or more selected from the following, and accordingly, the prepared polyimide may be soluble in water: 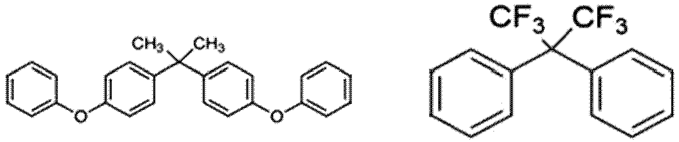 and
In the present disclosure, Y may be one or more selected from the following: 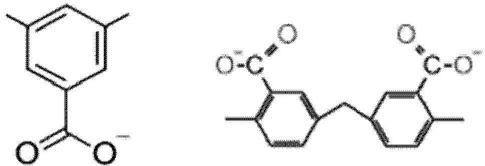 and
Preferably, Y may be 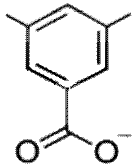 and when Y is , 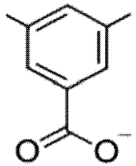 it may further include a monovalent cation.

In the present disclosure, Z may be one or more selected from the following: and

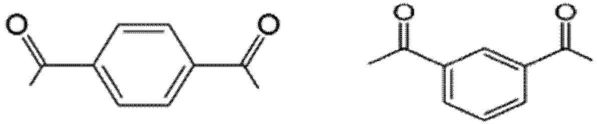

Preferably, Z may be .

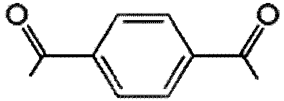

In the present disclosure, the polyimide may be prepared by reacting an acid anhydride, a diamine, and a carbonyl chloride.

A molar amount of the acid anhydride and the carbonyl chloride may be 20 to 60 moles and 40 to 80 moles, respectively, per 100 moles of diamine, and preferably 30 to 50 moles and 50 to 70 moles, respectively, per 100 moles of diamine. If the content of acid anhydride and carbonyl chloride is outside the above range, the solubility of the prepared polyimide may decrease, so the above range is preferable.

In the present disclosure, the molar content of the acid anhydride may be equal to or less than the content of the carbonyl chloride, and the mole ratio of the acid anhydride to the carbonyl chloride may be 1:1 to 1:5, preferably 1:1.2 to 1:2. If the mole ratio of the acid anhydride to the carbonyl chloride is outside the above range, the solubility of the prepared polyimide may decrease, so the above range is preferable.

In the present disclosure, the acid anhydride may be one or more selected from the following, and accordingly, the prepared polyimide may be dissolved in water:

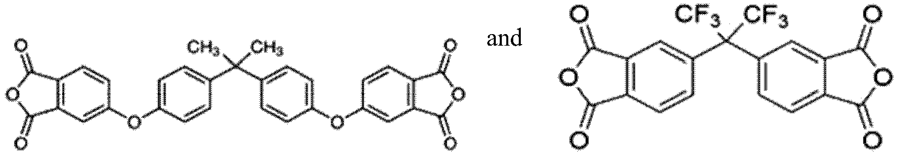

In the present disclosure, the diamine may be one or more selected from the following:

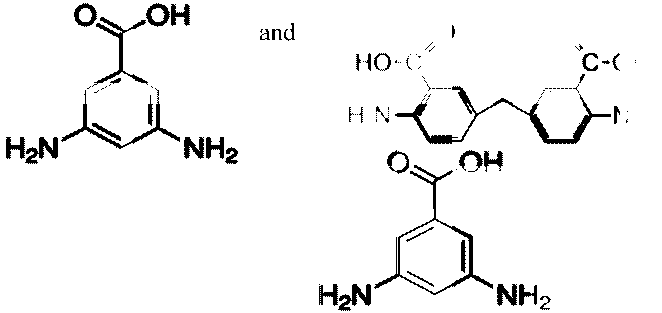

Preferably, the diamine may be .

In the present disclosure, the carbonyl chloride may be one or more selected

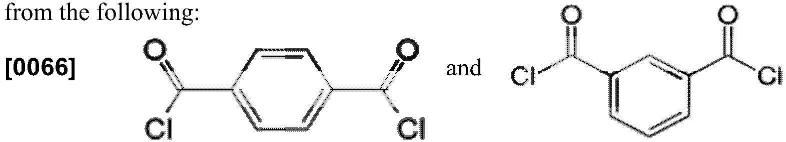

Preferably, the carbonyl chloride may be .

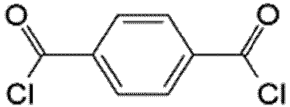

In the present disclosure, the polyimide may be represented by the following Chemical Formula 2-1 or 2-2, preferably.

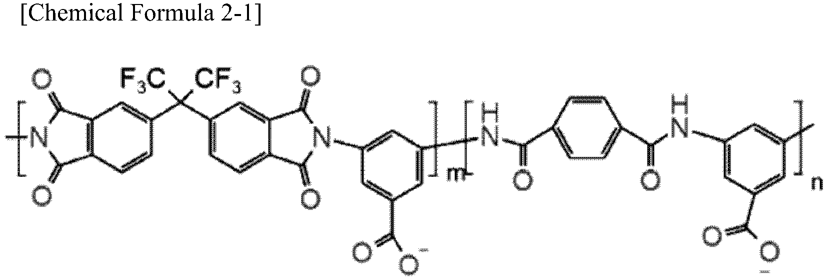

In Chemical Formula 2-1, m and n are positive integers, m may be 4 or more, the molar ratio of m to n may be 1:1 to 1:5, preferably 1:1.2 to 1:2, and most preferably 1:1.5, and Chemical Formula 2-1 may further include a monovalent cation.

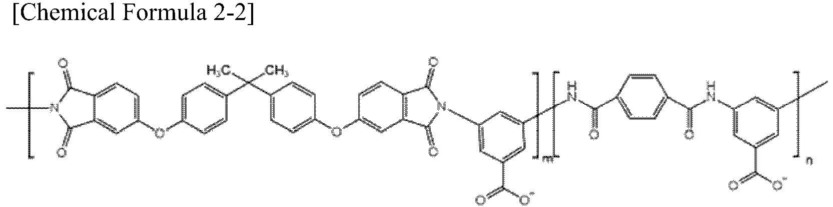

In Chemical Formula 2-2, m and n are positive integers, m may be 4 or more, the molar ratio of m to n may be 1:1 to 1:5, preferably 1:1.2 to 1:2, and most preferably 1:1.5, and Chemical Formula 2-2 may further include a monovalent cation.

Another aspect of the present disclosure provides a negative electrode for a secondary battery comprising the polyimide binder for a negative electrode material described above.

The negative electrode may be manufactured by coating a negative electrode slurry comprising a negative electrode active material, a binder, a conductive agent, a solvent, etc., on a negative electrode current collector, and then drying and calendering the same.

The negative electrode current collector may have a thickness in a range of 3 to 500 µm. The negative electrode current collector is not particularly limited as long as it has high conductivity without causing chemical changes in a lithium secondary battery. For example, the negative electrode current collector may be made of copper, stainless steel, aluminum, nickel, titanium, sintered carbon, or copper or stainless steel having a surface treated with carbon, nickel, titanium, silver, or the lik**e**, or an aluminum-cadmium alloy. Also, similar to a positive electrode current collector, the negative electrode current collector may have fine irregularities formed on its surface to enhance the binding force with the negative electrode active material. The negative electrode current collector may be used in the form of a film, sheet, foil, net, porous body, foam, non-woven fabric, or the like.

In addition, the negative electrode active material is a compound capable of reversibly intercalating and deintercalating lithium ions. The negative electrode active material may be selected from the group consisting of carbon materials, metals or alloys thereof with lithium, metal composite oxides, materials capable of doping and dedoping lithium, and transition metal oxides.

As the carbon material, any carbon-based negative electrode active material generally used in lithium-ion secondary batteries can be used without particular limitation. For example, the carbon material may be crystalline carbon, amorphous carbon, or a mixture thereof. As the crystalline carbon, graphite such as amorphous, plate-like, flake-shaped, spherical, or fibrous natural graphite or artificial graphite may be used, and as the amorphous carbon, soft carbon (low-temperature calcined carbon), hard carbon, mesophase pitch carbides, calcined cokes, or the like may be used.

The metal composite oxide may be selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, elements of Group 1, 2, or 3 of the periodic table**,** or halogens; 0<x≤1; 1≤y≤3; 1≤z≤8).

As the material capable of doping and dedoping lithium, Si, SiOₓ (0<x≤2), a Si-Y alloy (wherein Y is an element selected from the group consisting of alkali metals, alkaline earth metals, Group 13 elements, Group 14 elements, transition metals, rare earth elements, and combinations thereof, and is not Si), Sn, SnO₂, a Sn-Y alloy (wherein Y is an element selected from the group consisting of alkali metals, alkaline earth metals, Group 13 elements, Group 14 elements, transition metals, rare earth elements, and combinations thereof, and is not Sn), and the like may be used, and at least one of these may be used in combination with SiO₂. The element Y may be an element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

As the transition metal oxide, a lithium-containing titanium composite oxide (LTO), vanadium oxide, lithium vanadium oxide, and the like may be used.

The negative electrode active material may be included in an amount of 80 wt% to 99 wt% based on the total weight of the solids in the negative electrode slurry.

The binder includes the aforementioned polyimide binder for a secondary battery negative electrode material.

The conductive agent is a component for further enhancing the conductivity of the negative electrode active material and may be added in an amount of 1 to 20 wt% based on the total weight of the solids in the negative electrode slurry. The conductive agent may be the same as or different from the conductive agent used in positive electrode manufacturing. For example, as the conductive agent, carbon powder, conductive fibers, metal powder, graphite powder, conductive whiskers, conductive metal oxides, polyphenylene derivatives, and the like may be used.

As the carbon powder, carbon black, acetylene black (or Denka Black), Ketjen black, channel black, furnace black, lamp black, or thermal black may be used. As the graphite powder, natural graphite, artificial graphite, or graphite having a highly developed crystal structure may be used. As the conductive fibers, carbon fibers or metal fibers may be used. As the metal powder, carbon fluoride, aluminum, or nickel powder may be used. As the conductive whiskers, zinc oxide, potassium titanate, and the like may be used. As the conductive metal oxide, titanium oxide, and the like may be used.

The negative electrode active material slurry may further include a solvent. The solvent may be water or an organic solvent such as NMP or alcohol, and may be used in an amount sufficient to provide a desired viscosity when the negative electrode active material, binder, and conductive agent are included. For example, the solvent may be included such that the concentration of solids in the slurry containing the negative electrode active material, binder, and conductive agent is 50 wt% to 95 wt%, preferably 70 wt% to 90 wt%.

Another aspect of the present disclosure provides a secondary battery including the above-described negative electrode for a secondary battery.

The lithium secondary battery according to one aspect of the present disclosure may be usefully applied to portable devices such as mobile phones, laptop computers, and digital cameras, as well as to electric vehicle applications such as hybrid electric vehicles (HEVs).

The lithium secondary battery of the present disclosure may be manufactured by applying and curing a solid electrolyte composition on a positive electrode, and then laminating the negative electrode of the present disclosure.

The positive electrode includes a positive active material. The positive electrode may be manufactured by coating a positive slurry comprising a positive active material, a binder, a conductive agent, a solvent, and the like, on a positive electrode current collector, followed by drying and calendering.

For example, as the positive electrode current collector, stainless steel, aluminum, nickel, titanium, sintered carbon, or aluminum or stainless steel having a surface treated with carbon, nickel, titanium, silver, and the like may be used.

Specifically, the positive electrode active material may include a lithium composite metal oxide containing lithium and one or more metals such as cobalt, manganese, nickel, or aluminum. The lithium composite metal oxide may be a lithium-manganese-based oxide (e.g., LiMnO₂, LiMn₂O₄, and the like), a lithium-cobalt-based oxide (e.g., LiCoO₂, and the like), a lithium-nickel-based oxide (e.g., LiNiO₂, and the like), a lithium-nickel-manganese-based oxide (e.g., LiNi_{1-Y}Mn_{Y}O₂ (where 0<Y<1), LiMn_{2-z}Ni_{z}O₄ (where 0<Z<2), and the like), a lithium-nickel-cobalt-based oxide (e.g., LiNi_{1-Y1}CoY₁O₂ (where 0<Y1<1), and the like), a lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), and the like), a lithium-nickel-manganese-cobalt-based oxide (e.g., Li(NiₚCo_{q}Mnᵣ₁)O₂ (where 0<p<1, 0<q<1, 0<r1<1, p+q+r1=1) or Li(Niₚ₁Co_{q1}Mnᵣ₂)O₄ (where 0<p1<2, 0<q1<2, 0<r2<2, p1+q1+r2=2), and the like), or a lithium-nickel-cobalt-transition metal (M) oxide (e.g., Li(Niₚ₂Co_{q2}Mnᵣ₃Mₛ₂)O₂ (where M is selected from the group consisting of Al, Fe, V, Cr, Ti, Ta, Mg, and Mo, and p2, q2, r3, and s2 are atomic fractions such that 0<p2<1, 0<q2<1, 0<r3<1, 0<s2<1, and p2+q2+r3+s2=1)), and the like.

In terms of enhancing the capacity characteristics and stability of the battery, the lithium composite metal oxide may be LiCoO₂, LiMnO₂, LiNiO₂, a lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and the like), or a lithium nickel cobalt aluminum oxide (e.g., Li(Ni_{0.8}Co_{0.15}Al_{0.05})O₂, and the like).

The positive electrode active material may be included in an amount of 80 wt% to 99 wt% based on the total weight of the solids in the positive electrode slurry.

The binder is a component that facilitates the bonding between the conductive agent, the active material, and the current collector. The binder is added in an amount of 1 to 30 wt% based on the total weight of the solids in the positive electrode slurry. For example, as the binder, polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluororubber, and the like may be used.

The conductive agent is added in an amount of 1 to 30 wt% based on the total weight of the solids in the positive electrode slurry. The conductive agent is not particularly limited as long as it has conductivity without causing chemical changes in the lithium secondary battery. For example, as the conductive agent, carbon powder, conductive fibers, metal powder, graphite powder, conductive whiskers, conductive metal oxides, polyphenylene derivatives, and the like may be used.

As the carbon powder, carbon black, acetylene black (or Denka Black), Ketjen black, channel black, furnace black, lamp black, or thermal black may be used. As the graphite powder, natural graphite, artificial graphite, or graphite having a highly developed crystal structure may be used. As the conductive fibers, carbon fibers or metal fibers may be used. As the metal powder, carbon fluoride, aluminum, or nickel powder may be used. As the conductive whiskers, zinc oxide, potassium titanate, and the like may be used. As the conductive metal oxide, titanium oxide, and the like may be used.

The positive electrode slurry may include a solvent. The solvent may include an organic solvent such as NMP (N-methyl-2-pyrrolidone). The solvent may be used in an amount that provides a desired viscosity when the positive electrode active material, binder, and conductive agent are included. For example, the solvent may be included such that the solid content in the slurry comprising the positive electrode active material, binder, and conductive agent is 50 wt% to 95 wt%, preferably 70 wt% to 90 wt%.

The negative electrode is the same as described above, and a detailed description thereof will be omitted.

### MODE FOR CARRYING OUT THE INVENTION

Hereinafter, the present disclosure will be described in more detail by way of preferred examples of the present disclosure.

The compounds used are as follows.

### Diamine

DABA: 3,5-diaminobenzoic acid
ODA: 4,4 '-oxydianiline
m-PDA: m-phenylenediamine
MBAA: 5,5 '-methylenebis(anthranilic acid)

### Acid Anhydride

BPADA: 2,2'-bis[(3,4-dicarboxyphenoxy)phenyl]propane dianhydride
BTDA: 3,3',4,4',4,4'-benzophenonetetracarboxylic dianhydride
BPDA: biphenyltetracarboxylic dianhydride
PMDA: pyromellitic dianhydride
ODPA: oxydiphthalic dianhydride
DSDA: diphenyl sulfone-3,4,3',4'-tetracarboxylic dianhydride
6-FDA: 2,2 '-bis(3,4-dicarboxyphenyl)hexafluoropropane dianhydride

### Carbonyl chloride

TPC: terephthaloyl chloride
IPC: isophthaloyl chloride

### <Examples and Comparative Examples>

In a 500 mL separable reactor, 300 mL of a solvent, dimethylacetamide (DMAc), was added, followed by the addition of a diamine, and the mixture was stirred until completely dissolved. Subsequently, an acid anhydride was added, and polymerization was performed while maintaining the temperature at 10°C. Then, propylene oxide in an amount of 1.2 equivalents relative to the carbonyl chloride was added, followed by the addition of the carbonyl chloride, and polymerization was performed for 4 hours with stirring. For the imidization reaction, pyridine in an amount of 2.5 equivalents and acetic anhydride in an amount of 2.5 equivalents, each relative to the acid anhydride, were added, and the mixture was stirred at 80°C for 1 hour. Afterward, a polymer precipitate was obtained using methanol, and the polymer was dried under vacuum to obtain a powder-form polymer. To dissolve the obtained polymer in water, 2-dimethylaminoethanol in an amount of 2.5 equivalents relative to the acid anhydride was added to distilled water and stirred to form a uniform solution. The obtained polymer was then added to achieve a solid content of 8 wt%, stirred at 60°C for 7 hours, and completely dissolved to prepare an aqueous binder. The following Table 1 shows the molar ratios of the added diamine, acid anhydride, and carbonyl chloride, and Table 2 shows the solubility of the prepared polyimide polymer. The solubility was evaluated by visually checking for undissolved polymer.

**[Table 1]**

| Category | Diamine (mol) | | | | Acid Anhydride (mol) | | | | | | | Carbonyl Chloride (mol) | |
|---|---|---|---|---|---|---|---|---|---|---|---|---|---|
| | DABA | MBAA | ODA | m-PDA | 6FDA | ODPA | BPADA | BPDA | PMDA | DSDA | BTDA | TPC | IPC |
| Example 1 | 100 | | | | 60 | | | | | | | 40 | |
| Example 2 | 100 | | - | - | 50 | - | - | - | - | - | - | 50 | - |
| Example 3 | 100 | | - | - | 40 | - | - | - | - | - | - | 60 | - |
| Example 4 | 100 | | - | - | 30 | - | - | - | - | - | - | 70 | - |
| Example 5 | 100 | | | | 20 | | | | | | | 80 | |
| Example 6 | 100 | | - | - | 40 | - | - | - | - | - | - | | 60 |
| Example 7 | 100 | | | | | | 50 | | | | | 50 | |
| Example 8 | 100 | | | | | | 40 | | | | | 60 | |
| Example 9 | 100 | | | | | | 30 | | | | | 70 | |
| Example 10 | 100 | | | | | | 20 | | | | | 80 | |
| Example 11 | | 100 | | | 50 | | | | | | | 50 | |
| Example 12 | | 100 | | | 40 | | | | | | | 60 | |
| Example 13 | | 100 | | | 30 | | | | | | | 70 | |
| Example 14 | | 100 | | | | | 50 | | | | | 50 | |
| Example 15 | | 100 | | | | | 40 | | | | | 60 | |
| Example 16 | | 100 | | | | | 30 | | | | | 70 | |
| Comparative Example 1 | 100 | | - | - | - | - | - | - | - | - | - | 50 | 50 |
| Comparative Example 2 | 100 | | - | - | - | 30 | - | - | - | - | - | 70 | - |
| Comparative Example 3 | 100 | | - | - | - | 40 | - | - | - | - | - | 60 | - |
| Comparative Example 4 | 100 | | - | - | - | 50 | - | - | - | - | - | 50 | - |
| Comparative Example 5 | 100 | | - | - | - | - | 10 | - | - | - | - | 90 | - |
| Comparative Example 6 | 100 | | - | - | - | - | 5 | - | - | - | - | 95 | - |
| Comparative Example 7 | 100 | | - | - | - | - | - | 40 | - | - | - | 60 | - |
| Comparative Example 8 | 100 | | - | - | - | - | - | 30 | - | - | - | 70 | - |
| Comparative Example 9 | 100 | | - | - | - | - | - | 20 | - | - | - | 80 | - |
| Comparative Example 10 | 100 | | - | - | - | - | - | - | 40 | - | - | 60 | |
| Comparative Example 11 | 100 | | - | - | - | - | - | - | 30 | - | - | 70 | - |
| Comparative Example 12 | 100 | | - | - | - | - | - | - | 20 | - | - | 80 | - |
| Comparative Example 13 | 100 | | - | - | - | - | - | - | - | 40 | - | 60 | - |
| Comparative Example 14 | 100 | | - | - | - | - | - | - | - | - | 40 | 60 | - |
| Comparative Example 15 | - | | 100 | - | - | - | 100 | - | - | - | - | - | - |
| Comparative Example 16 | - | | 100 | - | - | - | - | 100 | - | - | - | - | - |
| Comparative Example 17 | - | | 50 | 50 | - | - | 100 | - | - | - | - | - | - |
| Comparative Example 18 | - | | - | 100 | - | - | 50 | - | - | - | - | 50 | - |
| Comparative Example 19 | 90 | | 10 | - | 30 | - | - | - | - | - | - | 70 | - |
| Comparative Example 20 | 90 | | 10 | - | 40 | - | - | - | - | - | - | 60 | - |
| Comparative Example 21 | 80 | | 20 | - | 30 | - | - | - | - | - | - | 70 | - |
| Comparative Example 22 | 80 | | 20 | - | 40 | - | - | - | - | - | - | 60 | - |

**[Table 2]**

| Category | Solubility |
|---|---|
| Example 1 | ○ |
| Example 2 | ○ |
| Example 3 | ○ |
| Example 4 | ○ |
| Example 5 | Δ |
| Example 6 | ○ |
| Example 7 | ○ |
| Example 8 | ○ |
| Example 9 | ○ |
| Example 10 | Δ |
| Example 11 | ○ |
| Example 12 | ○ |
| Example 13 | ○ |
| Example 14 | ○ |
| Example 15 | ○ |
| Example 16 | ○ |
| Comparative Example 1 | X |
| Comparative Example 2 | X |
| Comparative Example 3 | X |
| Comparative Example 4 | X |
| Comparative Example 5 | X |
| Comparative Example 6 | X |
| Comparative Example 7 | X |
| Comparative Example 8 | X |
| Comparative Example 9 | X |
| Comparative Example 10 | X |
| Comparative Example 11 | X |
| Comparative Example 12 | X |
| Comparative Example 13 | X |
| Comparative Example 14 | X |
| Comparative Example 15 | X |
| Comparative Example 16 | X |
| Comparative Example 17 | X |
| Comparative Example 18 | X |
| Comparative Example 19 | X |
| Comparative Example 20 | X |
| Comparative Example 21 | X |
| Comparative Example 22 | X |

To dissolve a polyimide in water, it is necessary to use an acid anhydride having a bulky structure to increase the free volume of the polymer chains, and to form a structure having an ionic salt moiety within the polymer chains, thereby enabling dissolution in water.

Table 2 demonstrates that, as in the present disclosure, a water-soluble polyimide may be prepared using an acid anhydride having a structure such as 6FDA or BPADA, and a material capable of forming an ionic salt such as DABA or MBAA.

In addition, in the present disclosure, when the content of the acid anhydride and the amine having an ionic salt structure are within the scope of the present disclosure, a water-soluble polyimide can be prepared. In contrast, when the content is outside the scope of the present disclosure, the polyimide does not dissolve in water but exists in a dispersed form.

### Comparative Example 23

Polyacrylic acid (PAA), a commercially available product from Sigma-Aldrich, having a weight-average molecular weight of 250,000 and a solid content of 35%, was used for comparison.

### Experimental Example

Using the binders prepared in the Examples and Comparative Example 23, dissolved in water, charge-discharge characteristics and current-rate recovery were evaluated as follows, and the results are shown in Tables 3 and 4. Polyacrylic acid (PAA) was used as a control.

### [Half-cell preparation]

A slurry was prepared by uniformly mixing 10wt% of the negative electrode binder composition obtained in the Examples and Comparative Examples, 80wt% of silicon negative electrode material, and 10wt% of Super-P carbon black while adding water. The slurry was coated onto a copper foil, dried, and calendered to prepare a negative electrode. A lithium metal having a thickness of 1000µm was used as a counter electrode. An electrolyte (PuriEL) was used, which was prepared by dissolving 1.0M LiPF₆ in a mixed solvent of ethylene carbonate (EC) and diethyl carbonate (DEC) (1:1), further containing 3wt% fluoroethylene carbonate (FEC).

A half-cell was fabricated using the negative electrode, the counter electrode, and the electrolyte.

### [Measurement Method]

Charge-discharge: The half-cell prepared as described above was mounted on a battery cycler, charged and discharged at 0.1C for the first cycle, and then at 0.2C to stabilize the half-cell. Thereafter, charging was performed at 0.5C and discharging at 1.0C, while measuring the capacity (mAh/g) at each cycle.

Current-rate recovery: After stabilizing the half-cell at 0.1C and 0.2C, the C-rate was varied (0.1C → 0.2C → 1.0C → 2.0C → 3.0C → 5.0C → 3.0C → 2.0C → 1.0C → 0.2C), and the capacity at each C-rate was measured. The capacity at 1.0C was set as 100, and the capacities at other C-rates were represented as relative values.

**[Table 3]**

| Category | Capacity (mAh/g) | | | | | |
|---|---|---|---|---|---|---|
| | 1st Cycle | 5th | 10th | 15th | 20th | 25th |
| Example 1 | 1282 | 1120 | 1010 | 1000 | 995 | 990 |
| Example 2 | 1281 | 1100 | 1040 | 1032 | 1021 | 1000 |
| Example 3 | 1280 | 1110 | 1080 | 1050 | 1030 | 1010 |
| Example 7 | 1280 | 1130 | 1080 | 1055 | 1040 | 1020 |
| Example 8 | 1281 | 1100 | 1080 | 1030 | 1025 | 1010 |
| Example 9 | 1283 | 1110 | 1050 | 1020 | 1010 | 1000 |
| Comparative Example 23 | 1130 | 1000 | 950 | 800 | 700 | 600 |

**[Table 4]**

| Category | 0.1C | 0.2C | 1.0C | 2.0C | 3.0C | 5.0C | 3.0C | 2.0C | 1.0C | 0.2C |
|---|---|---|---|---|---|---|---|---|---|---|
| Example 1 | 105 | 103 | 100 | 98 | 98 | 97 | 98 | 98 | 99 | 101 |
| Example 2 | 105 | 102 | 100 | 98 | 98 | 96 | 98 | 98 | 99 | 102 |
| Example 3 | 105 | 102 | 100 | 98 | 98 | 96 | 98 | 98 | 99 | 102 |
| Example 7 | 105 | 103 | 100 | 98 | 98 | 96 | 98 | 98 | 99 | 102 |
| Example 8 | 105 | 102 | 100 | 98 | 98 | 96 | 98 | 98 | 98 | 101 |
| Example 9 | 105 | 102 | 100 | 98 | 98 | 96 | 98 | 98 | 99 | 102 |
| Comparative Example 23 | 105 | 103 | 100 | 98 | 95 | 93 | 94 | 95 | 95 | 98 |

Tables 3 and 4 demonstrate that, when the binder of the Examples is used as compared with Comparative Example 23, the charge-discharge performance remains stable even when volumetric expansion of the silicon negative electrode material occurs during charging and discharging, due to the improved mechanical properties of the polyimide.

In addition, in terms of rate capability recovery, it can be confirmed that the recovery rate is improved when returning to 1.0C after charge-discharge at a high C-rate.

### INDUSTRIAL APPLICABILITY

The polyimide binder for a negative electrode material according to the present disclosure may increase the silicon content, thereby improving the charge-discharge efficiency and cycle life of a secondary battery.

## Claims

1. A polyimide binder for a secondary battery negative electrode material, comprising a repeating unit represented by the following Chemical Formula 1: 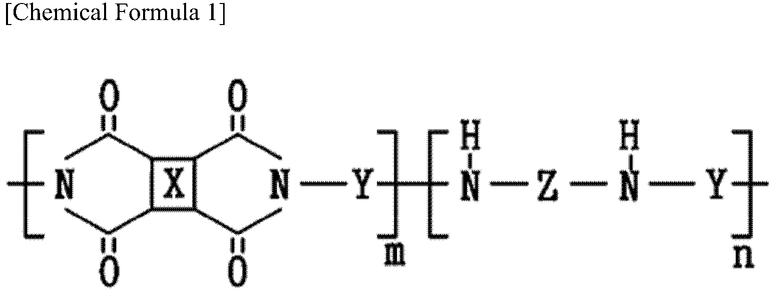
wherein, in Chemical Formula 1,
X is a group derived from an aromatic anhydride, a substituted or unsubstituted C6-C30 aromatic group, or a substituted or unsubstituted C4-C30 alicyclic group; Y is a substituted or unsubstituted C6-C30 aromatic group containing one or more aromatic rings, or a substituted or unsubstituted C4-C30 alicyclic group containing one or more rings; Z is a substituted or unsubstituted C6-C30 aromatic group containing one or more aromatic rings, or a substituted or unsubstituted C4-C30 alicyclic group containing one or more rings; and m and n are positive integers.

2. The polyimide binder for a secondary battery negative electrode material of claim 1,
wherein m is 4 or more, and the molar ratio of m to n is 1:1 to 1:5.

3. The polyimide binder for a secondary battery negative electrode material of claim 1,
wherein X is one or more selected from the following:

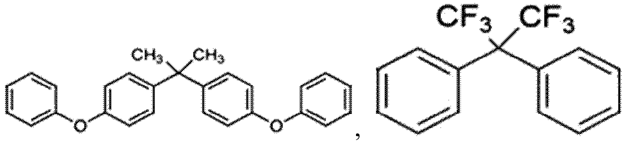

4. The polyimide binder for a secondary battery negative electrode material of claim 1,
wherein Y is one or more selected from the following:

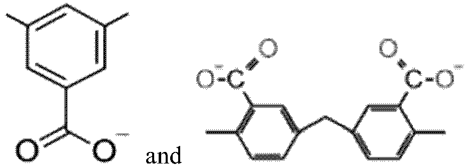

5. The polyimide binder for a secondary battery negative electrode material of claim 1,
wherein Z is one or more selected from the following:

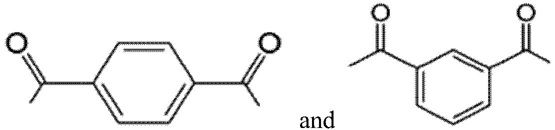

6. The polyimide binder for a secondary battery negative electrode material of claim 1, wherein the polyimide is prepared by reacting an acid anhydride, a diamine, and a carbonyl chloride.

7. The polyimide binder for a secondary battery negative electrode material of claim 6, wherein a molar amount of the acid anhydride and the carbonyl chloride is 20 to 60 moles and 40 to 80 moles, respectively, per 100 moles of diamine.

8. The polyimide binder for a secondary battery negative electrode material of claim 6, wherein the acid anhydride is one or more selected from the following:

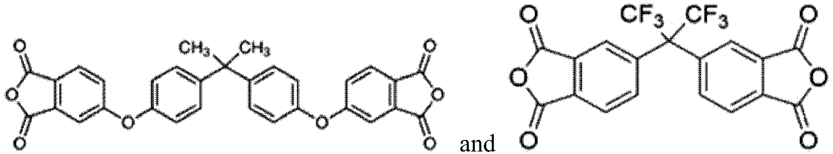

9. The polyimide binder for a secondary battery negative electrode material of claim 6,
wherein the diamine is one or more selected from the following:

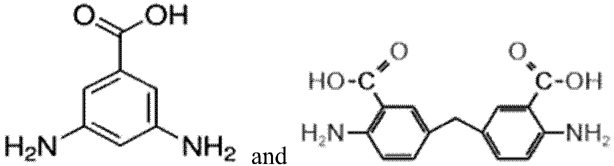

10. The polyimide binder for a secondary battery negative electrode material of claim 6,
wherein the carbonyl chloride is one or more selected from the following:

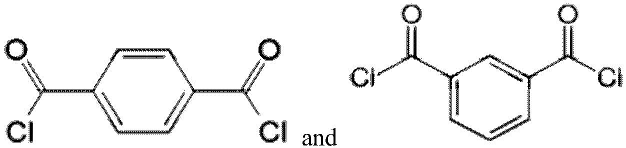

11. The polyimide binder for a secondary battery negative electrode material of claim 1, wherein the polyimide is soluble in water.

12. A negative electrode for a secondary battery, comprising the polyimide binder for a negative electrode material of any one of claims 1 to 11.

13. A secondary battery comprising the negative electrode for a secondary battery of claim 12.
